(19) **Europäisches Patentamt European Patent Office Office européen des brevets**

(11) **EP 4 005 688 B1**

(12) **EUROPEAN PATENT SPECIFICATION**

(45) Date of publication and mention of the grant of the patent:
**29.05.2024 Bulletin 2024/22**

(21) Application number: **20843299.7**

(22) Date of filing: **22.06.2020**

(51) International Patent Classification (IPC):
**B05D 7/00** *(2006.01)* **B05D 3/02** *(2006.01)*
**B05D 5/06** *(2006.01)* **C08G 18/24** *(2006.01)*
**C08G 18/28** *(2006.01)* **C08G 18/42** *(2006.01)*
**C08G 18/46** *(2006.01)* **C08G 18/62** *(2006.01)*
**C08G 18/72** *(2006.01)* **C08G 18/77** *(2006.01)*
**C08G 18/79** *(2006.01)* **C09D 7/62** *(2018.01)*
**C09D 175/04** *(2006.01)* **C09D 175/06** *(2006.01)*
**C08K 9/02** *(2006.01)*

(52) Cooperative Patent Classification (CPC):
(C-Sets available)
**C09D 7/62; B05D 3/0254; B05D 5/066;**
**B05D 7/572; C08G 18/246; C08G 18/2865;**
**C08G 18/2875; C08G 18/4219; C08G 18/4615;**
**C08G 18/6229; C08G 18/722; C08G 18/775;**
**C08G 18/792; C08G 18/798; C09D 175/04;** (Cont.)

(86) International application number:
**PCT/JP2020/024466**

(87) International publication number:
**WO 2021/014859 (28.01.2021 Gazette 2021/04)**

(54) **METHOD FOR FORMING MULTILAYER COATING FILM, AND MULTILAYER COATING FILM**

VERFAHREN ZUR FORMUNG EINES MEHRLAGIGEN BESCHICHTUNGSFILMS SOWIE MEHRSCHICHTIGER BESCHICHTUNGSFILM

PROCÉDÉ DE FORMATION DE FILM DE REVÊTEMENT MULTICOUCHE, ET FILM DE REVÊTEMENT MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2019 JP 2019135956**

(43) Date of publication of application:
**01.06.2022 Bulletin 2022/22**

(73) Proprietors:
• **KANSAI PAINT CO., LTD.**
**Amagasaki-shi, Hyogo-ken 661-8555 (JP)**
• **NISSAN MOTOR CO., LTD.**
**Yokohama-shi, Kanagawa 221-0023 (JP)**

(72) Inventors:
• **OHNUKI, Tatsuo**
**Hiratsuka-shi, Kanagawa 254-8562 (JP)**
• **UMEZAWA, Kenichi**
**Hiratsuka-shi, Kanagawa 254-8562 (JP)**
• **SUZUKI, Junpei**
**Hiratsuka-shi, Kanagawa 254-8562 (JP)**
• **OKAMOTO, Tomoyuki**
**Atsugi-shi, Kanagawa 243-0123 (JP)**
• **MICHIURA, Chie**
**Atsugi-shi, Kanagawa 243-0123 (JP)**
• **KURIHARA, Ayaka**
**Atsugi-shi, Kanagawa 243-0123 (JP)**
• **GOTO, Takeshi**
**Atsugi-shi, Kanagawa 243-0123 (JP)**

(74) Representative: **Kraus & Lederer PartGmbB**
**Thomas-Wimmer-Ring 15**
**80539 München (DE)**

(56) References cited:
**WO-A1-2019/225559**   **JP-A- 2002 205 006**
**JP-A- 2006 326 538**    **JP-A- 2010 029 765**
**JP-A- 2010 194 429**    **JP-A- 2014 070 151**
**JP-A- 2016 155 945**    **US-A1- 2018 104 718**

(52) Cooperative Patent Classification (CPC): (Cont.)
**C09D 175/06;** B05D 2201/02; B05D 2202/10;
B05D 2420/02; B05D 2425/01; B05D 2451/00;
B05D 2502/00; B05D 2503/00; B05D 2508/00;
B05D 2601/06; B05D 2601/22; C08K 9/02

C-Sets
B05D 2420/03, B05D 2601/06;
B05D 2425/01, B05D 2601/22;
B05D 2451/00, B05D 2401/20, B05D 2401/20,
B05D 2401/20, B05D 2401/10

**Description**

Technical Field

The present disclosure relates to a method for forming a multilayer coating film and a multilayer coating film.

Background Art

In automotive painting, a method of forming a multilayer coating film by a 3-coat 2-bake (3C2B) system has been widely adopted, the system including the steps performed in the following order: application of an electrodeposition paint on a substrate, application of an intermediate paint, bake curing, application of an aqueous base paint, preheating, application of a clear paint, and bake curing. However, in recent years, from the viewpoint of energy saving, a 3-coat 1-bake (3C1B) system has been attempted, this system omitting the bake curing after the application of an intermediate paint to only include the steps performed in the following order: application of an electrodeposition paint on a substrate, application of an aqueous intermediate paint, preheating, application of an aqueous base paint, preheating, application of a clear paint, and bake curing.

In recent years, for the purposes of reducing the facility cost in manufacturing process of automobile outer panels and of matching the color tones of metal members and plastic members, there has been a demand for a method for integrally painting metal members and plastic members fitted to the metal members.

For example, Patent Document 1 discloses a coating method for continuously coating an automobile body, in which: after applying an undercoat material on an automobile body, resinous parts are fitted to the body; a conductive primer is applied mainly on the resinous parts; an intermediate paint is wholly applied; and then a top paint is applied so as to integrally paint the resinous parts and the automobile body.

Further, Patent Document 2 discloses a method for forming a multilayer coating film, in which: an aqueous intermediate paint is applied on a base substrate having both a steel plate and a plastic base material so as to form an intermediate coating film; an aqueous base paint is applied on the formed intermediate coating film so as to form a base coating film; an organic solvent type clear paint is applied so as to form a clear coating film; and the three layers of the intermediate coating film, the base coating film and the clear coating film are heated to cure, the aqueous base paint containing, in 100% by mass of solid resin content, (a) 10 to 60% by mass of solid content of an acrylic resin emulsion obtained by emulsion polymerization of a monomer mixture having 0.2 to 20% by mass of a crosslinking monomer, (b) 5 to 40% by mass of solid content of a water-soluble acrylic resin, and (c) 20 to 40% by mass of solid content of a melamine resin, and (d) 10 to 40 parts by mass of a propylene glycol monoalkyl ether relative to 100 parts by mass of paint solid resin content.

On the other hand, exterior colors of industrial products such as automobiles include paint colors that look different depending on observation angles, that is, paint colors that have high lightness in highlight (when a coated plate is viewed in the vicinity of the specularly reflected light) and show a large change in color when the observation angle is changed from highlight to shade (when a coated plate is viewed obliquely). Such paint colors are referred to as paint colors with high flip-flop property. There is a high demand for the paint colors with high flip-flop property since such paint colors are generally considered to have effects of enhancing aesthetics in shape of industrial products. In addition, white pearl color is highly popular since it creates a sense of high class. In recent years, there is a demand for a white pearl color having high flip-flop property. For example, Patent Literature 3 discloses a method for forming a white pearl coating film which provides a pearl coating film having high flip-flop property and good white pearl like appearance.

Citation List

Patent Literature

[Patent Literature 1] Japanese Unexamined Patent Application Publication No. S61(1986)-74682
[Patent Literature 2] Japanese Unexamined Patent Application Publication No. 2011-131135
[Patent Literature 3] Japanese Unexamined Patent Application Publication No. 2006-326538

Further 4C1B methods for forming a multilayer coating employing mica pigments as such and ratios of hydroxyl-containing resin and polyisocyanate compound outside the claimed range of the present invention are disclosed in US 2018/104718 A1 and JP 2014-070151 A.

Summary of the Disclosure

Technical Problem

However, if the baking temperature is lowered in the aforementioned methods disclosed in Patent Literatures 1 and 2, it becomes difficult to ensure the performance of the coating film such as finished appearance and water resistance. Also, from the viewpoint of further energy saving, there is a demand for an integrated coating system that can cure a coating film at a lower temperature while maintaining the performance of the coating film.

According to the invention disclosed in Patent Literature 3, the lightness in highlight and the flip-flop property can be insufficient. There is a demand for higher designability.

The present disclosure has been made in view of such circumstances and directed to provide a method for forming a multilayer coating film which provides a whitish multilayer coating film excellent in low temperature curing properties, finished appearance and designability on both a metal member and a plastic member of an automobile outer panel.

Solution to the Problem

The present disclosure provides a method for forming a multilayer coating film, including: a step (1) of applying an aqueous 2-package type first colored paint (X) on both a metal member and a plastic member of an automobile outer panel so as to form an uncured first colored coating film; a step (2) of applying an aqueous 1-package type white paint (Y-1) on the uncured first colored coating film obtained in the step (1) so as to form an uncured white coating film; a step (3) of applying an aqueous 1-package type interference color paint (Y-2) on the uncured white coating film obtained in the step (2) so as to form an uncured interference color coating film; a step (4) of applying a solvent-based 2-package type clear paint (Z) on the uncured interference color coating film obtained in the step (3) so as to form an uncured clear coating film; and a step (5) of heating the uncured first colored coating film, the uncured white coating film, the uncured interference color coating film, and the uncured clear coating film formed in the steps (1) to (4) at 75 to 100°C so as to simultaneously cure these coating films to form a multilayer coating film. In the method for forming a multilayer coating film, the steps (1) to (5) are sequentially conducted. The aqueous 1-package type interference color paint (Y-2) contains a vehicle-forming resin (A) and titanium oxide-coated synthetic mica (B), the aqueous 1-package type interference color paint (Y-2) containing 27 to 33 parts by mass of the titanium oxide-coated synthetic mica (B) based on 100 parts by mass of the vehicle-forming resin (A), and having a paint solid content of 20 to 24% by mass. The solvent-based 2-package type clear paint (Z) contains a hydroxyl group-containing acrylic resin (Z1) and a polyisocyanate compound (Z2) in a ratio of 1.5 to 2.0 equivalents of isocyanate groups in the polyisocyanate compound (Z2) relative to 1 equivalent of hydroxyl groups in the hydroxyl group-containing acrylic resin (Z1), and the polyisocyanate compound (Z2) contains a polyisocyanate compound having a uretdione structure and a compound of a trimer or more of diisocyanate in a mass ratio of solid content of 10/90 to 50/50. The multilayer coating film has a lightness in highlight (L* (15°)) of 125 to 130, a flip-flop (L* (15°) - L* (110°)) of 45 to 55, and a b-value in highlight (b* (15°)) of -2.0 to -1.0 when measured by a multi-angle spectrophotometer.

It is preferred that the aqueous 2-package type first colored paint (X) contains a hydroxyl group-containing polyester resin (X1), a hydroxyl group-containing acrylic resin (X2), a hydroxyl group-containing polyurethane resin (X3), and a polyisocyanate compound (X4) in a ratio of 1.5 to 2.0 equivalents of isocyanate groups in the polyisocyanate compound (X4) relative to 1 equivalent of hydroxyl groups in the hydroxyl group-containing polyester resin (X1), the hydroxyl group-containing acrylic resin (X2), and the hydroxyl group-containing polyurethane resin (X3).

It is preferred that the aqueous 1-package type white paint (Y-1) contains a hydroxyl group-containing polyester resin (Y1), a hydroxyl group-containing acrylic resin (Y2), a hydroxyl group-containing polyurethane resin (Y3), and a melamine resin (Y4); and water absorption of the uncured white coating film is 6.5% or less at 20°C.

It is preferred that the plastic member is coated with a primer in advance.

It is preferred that the plastic member is made of a composite material of a polyamide resin and a modified polyphenylene ether resin.

It is preferred that the solvent-based 2-package type clear paint (Z) further contains polysiloxane modified silica particles (Z3) having a mean primary particle diameter of 1 to 40 nm.

A multilayer coating film of the present disclosure is obtained by the method for forming a multilayer coating film according to the present disclosure.

Note that the multilayer coating film of the present disclosure is obtained by providing an uncured white coating film, an uncured interference color coating film, and an uncured clear coating film in this order, and then curing these coating films at the same time. Therefore, it is presumed that the boundaries of the neighboring coating films include areas in which the compositions of the neighboring coating films partially mix together. In addition, since the cured product contains polymers, it is difficult to specify the structure of the multilayer coating film by means of a general formula or the like or by means of the properties of the multilayer coating film. In other words, the multilayer coating film of the present disclosure can be specified only by the method for forming the multilayer coating film of the present disclosure.

Thus, there are circumstances in which specifying the multilayer coating film of the present disclosure by its structure or properties is impossible or is far from practical.

Advantageous Effects of the Disclosure

According to the present inventive method for forming a multilayer coating film, a whitish multilayer coating film excellent in low temperature curing properties, finished appearance and designability can be formed on both a metal member and a plastic member of an automobile outer panel.

Description of Embodiments

Hereinafter, a method for forming a multilayer coating film of the present disclosure will be described for each step in order.

STEP (1)

In step (1) of the disclosure, an aqueous 2-package type first colored paint (X) is applied on both a metal member and a plastic member of an automobile outer panel to form an uncured first colored coating film.

Examples of the material of the metal member include iron, aluminum, brass, copper, tin plate, stainless steel, zinc-plated steel, and zinc-alloy (e.g., Zn-Al, Zn-Ni and Zn-Fe) -plated steel. It is desirable that the surface of the metal member has been subjected to a surface treatment such as phosphate treatment, chromate treatment and complex oxide treatment. It is more desirable that the surface has been further subjected to a cationic electrodeposition coating.

Examples of the material of the plastic member include polyolefins obtained by (co)polymerizing one or two or more olefins having 2 to 10 carbon atoms such as ethylene, propylene, butylene and hexene; and composite materials of a modified polyphenylene ether resin; and a polycarbonate, an ABS resin, a urethane resin, a polyamide resin, or a polyamide resin. Examples of the plastic member include bumpers, spoilers, grills, fenders. These plastic members may be pre-coated with a primer as needed. As the primer, a conventionally known primer containing a chlorinated polyolefin, a blocked isocyanate resin, an epoxy resin, or the like can be used.

The metal member and the plastic member can be assembled by a known method.

The aqueous 2-package type first colored paint (X) preferably contains a hydroxyl group-containing polyester resin (X1), a hydroxyl group-containing acrylic resin (X2), a hydroxyl group-containing polyurethane resin (X3), and a polyisocyanate compound (X4) as film-forming components. These are contained preferably in a ratio of 1.5 to 2.0 equivalents, or more preferably in a ratio of 1.5 to 1.9 equivalents, of isocyanate groups in the polyisocyanate compound (X4) relative to 1 equivalent of hydroxyl groups in the hydroxyl group-containing polyester resin (X1), the hydroxyl group-containing acrylic resin (X2), and the hydroxyl group-containing polyurethane resin (X3) from the viewpoint of the curability at low temperature.

The hydroxyl group-containing polyester resin (X1) encompasses those obtained by neutralizing a polyester resin prepared by means of esterification reaction usually using a polyhydric alcohol and a polybasic acid, as well as, if necessary, a monobasic acid, an oil component (including fatty acid thereof) and the like. It is suitable that the weight average molecular weight of the polyester resin is generally within a range of about 3,000 to 100,000, preferably 4,000 to 70,000, and more preferably 5,000 to 30,000.

Examples of the polyhydric alcohol include ethylene glycol, diethylene glycol, propylene glycol, butanediol, pentanediol, hexanediol, 2,2-dimethylpropanediol, glycerin, trimethylolpropane, pentaerythritol, and ethylene oxide adducts or propylene oxide adducts of bisphenol compounds. These may be used alone or in combination of two or more thereof.

Examples of the polybasic acid include phthalic acid, isophthalic acid, tetrahydrophthalic acid, hexahydrophthalic acid, maleic acid, succinic acid, adipic acid, sebacic acid, trimellitic acid, pyromellitic acid, and anhydrides thereof. These may be used alone or in combination of two or more thereof. Examples of the monobasic acid include benzoic acid and t-butylbenzoic acid. Examples of the oil component include castor oil, dehydrated castor oil, safflower oil, soybean oil, linseed oil, tall oil, coconut oil, and fatty acids thereof. These may be used alone or in combination of two or more thereof.

In the polyester resin described above, carboxyl groups can be introduced by a combined use of polybasic acids such as trimellitic acid and pyromellitic acid having 3 or more carboxyl groups per molecule as a part of a polybasic acid component, or by an addition of dicarboxylic acid by half-esterification. Hydroxyl groups can be readily introduced by a combined use of polyhydric alcohols such as glycerin and trimethylolpropane having 3 or more hydroxyl groups per molecule as a part of a polyhydric alcohol component.

The carboxylic groups in the hydroxyl group-containing polyester resin (X1) can be neutralized using a basic substance. The basic substance may be preferably a water-soluble one such as ammonia, methylamine, ethylamine, propylamine, butylamine, dimethylamine, trimethylamine, triethylamine, ethylenediamine, morpholine, methylethanolamine, dimethylethanolamine, diethanolamine, triethanolamine, diisopropanolamine, or 2-amino-2-methylpropanol. These may be used alone or in combination of two or more thereof.

The hydroxyl group-containing polyester resin (X1) preferably has an acid value generally within in a range of 10 to 100 mg KOH/g, specifically 20 to 80 mg KOH/g, especially 20 to 50 mg KOH/g; and a hydroxyl value generally within in a range of 10 to 300 mg KOH/g, specifically 30 to 200 mg KOH/g, especially 50 to 200 mg KOH/g.

The hydroxyl group-containing acrylic resin (X2) may be, for example, a water-soluble acrylic resin having a weight average molecular weight of 5,000 to 100,000, preferably 10,000 to 90,000, and more preferably 20,000 to 80,000; or an acrylic resin emulsion having a weight average molecular weight of 50,000 or more, preferably 75,000 or more, and more preferably 100,000 or more, which are obtained by copolymerization of a monomer mixture composed of a hydrophilic group-containing polymerizable unsaturated monomer such as a hydroxyl group-containing polymerizable unsaturated monomer or a carboxyl group-containing polymerizable unsaturated monomer; and other polymerizable unsaturated monomers.

Examples of the hydroxyl group-containing polymerizable unsaturated monomer include hydroxyalkyl esters of acrylic acid or methacrylic acid such as 2-hydroxyethyl (meth)acrylate, 2- or 3-hydroxypropyl (meth)acrylate, and 4-hydroxybutyl(meth)acrylate; polyethylene glycol (meth)acrylate; and polypropylene glycol (meth)acrylate. These may be used alone or in combination of two or more thereof.

Examples of the carboxyl group-containing polymerizable unsaturated monomer include (meth)acrylic acid, crotonic acid, maleic acid, fumaric acid, itaconic acid and a half-monoalkyl esterified product of dicarboxylic acids thereof. Examples of the hydrophilic group-containing polymerizable unsaturated monomer other than these include a polyalkylene chain containing polymerizable unsaturated monomer such as polyethylene glycol (meth)acrylate, and polypropylene glycol (meth)acrylate.

Examples of the aforementioned other polymerizable unsaturated monomers include alkyl esters or cycloalkyl esters of (meth)acrylic acid having 1 to 24 carbon atoms such as methyl(meth)acrylate, ethyl (meth)acrylate, n-propyl(meth)acrylate, i-propyl(meth)acrylate, n-butyl(meth)acrylate, i-butyl(meth)acrylate, t-butyl(meth)acrylate, 2-ethylhexyl (meth)acrylate, cyclohexyl (meth)acrylate, lauryl (meth)acrylate, or isobornyl (meth)acrylate; hydroxyalkyl esters of (meth)acrylic acid such as 2-hydroxyethyl (meth)acrylate, 2- or 3-hydroxypropyl (meth)acrylate, and 4-hydroxybutyl (meth)acrylate; glycidyl (meth)acrylate; acrylonitrile; acrylamide; styrene; vinyltoluene; vinyl acetate; vinyl chloride; and 1,6-hexanediol diacrylate. These may be used alone or in combination of two or more thereof.

The copolymerization of the monomer mixture mentioned above can be carried out by a method known per se, i.e., a solution polymerization method when the water-soluble acrylic resin is desired, or an emulsion polymerization method when the acrylic resin emulsion is desired, for example.

When the hydroxyl group-containing acrylic resin (X2) is an acrylic resin emulsion obtained by emulsion polymerization, it may be a multilayered particulate emulsion obtained by emulsion polymerization of the monomer mixture at multiple stages in the presence of water and an emulsifier.

The carboxylic groups of the hydroxyl group-containing acrylic resin (X2) can be neutralized by using the basic substance described above, as needed.

It is preferable that the hydroxyl group-containing acrylic resin (X2) generally has an acid value within in a range of 10 to 100 mg KOH/g, specifically 15 to 80 mg KOH/g, especially 20 to 60 mg KOH/g; and a hydroxyl value generally within in a range of 10 to 250 mg KOH/g, specifically 20 to 200 mg KOH/g, especially 30 to 150 mg KOH/g.

The hydroxyl group-containing polyurethane resin (X3) may preferably be a hydrophilic polyurethane resin which can be dissolved or dispersed in water. For example, the hydroxyl group-containing polyurethane resin (X3) may preferably be an aqueous dispersion of a self-emulsifying urethane resin having a mean particle diameter of 0.001 to 1.0 μm, particularly 0.02 to 0.3 μm, which can be obtained by means of chain extension and emulsification of a urethane prepolymer obtained by, after or while neutralizing, reacting in a one-shot process or a multistage process, e.g., (i) an aliphatic and/or alicyclic diisocyanate, (ii) a diol having a number average molecular weight of 500 to 5,000, (iii) a low molecular weight polyhydroxyl compound, and (iv) a dimethylol alkanoic acid with each other in an NCO/OH equivalent ratio generally within a range of 1/0.5 to 1/0.95, especially 1/0.6 to 1/0.9; and particularly of which a part or all of the organic solvent used in the production process has been distilled.

The hydroxyl group-containing polyurethane resin (X3) preferably has an acid value generally within a range of 10 to 60 mg KOH/g, specifically 20 to 50 mg KOH/g, particularly 20 to 40 mg KOH/g; and a hydroxyl value generally within a range of 10 to 60 mg KOH/g, specifically 20 to 50 mg KOH/g, particularly 20 to 40 mg KOH/g.

The polyisocyanate compound (X4) is a compound having at least two unblocked isocyanate groups per molecule. Examples of the polyisocyanate compound (X4) include aliphatic polyisocyanates, alicyclic polyisocyanates, aromatic aliphatic polyisocyanates, aromatic polyisocyanates, and derivatives thereof. Examples of the derivatives of the polyisocyanates include dimers, trimers, biurets, allophanates, uretdiones and isocyanurates of the polyisocyanates mentioned above.

These polyisocyanates and derivatives may be used alone or in combination of two or more thereof. Among these polyisocyanates, it is preferable to use aliphatic diisocyanates, alicyclic diisocyanates and derivatives thereof alone or in combination of two or more.

As the polyisocyanate compound (X4), a water dispersible polyisocyanate compound is preferably used from the viewpoint of smoothness of an obtained coating film. The water dispersible polyisocyanate compound may be any polyisocyanate compound without limitation as long as it can be stably dispersed in an aqueous medium. In particular, the water dispersible polyisocyanate compound may preferably be a hydrophilized polyisocyanate compound modified to be hydrophilic (X4-1), a polyisocyanate compound to which water dispersibility was imparted by pre-mixing the polyisocyanate compound (X4) with a surfactant, or the like.

Examples of the hydrophilized polyisocyanate compound (X4-1) include: an anionic hydrophilized polyisocyanate compound (X4-1-1) obtained by reacting an active hydrogen group of an active hydrogen group-containing compound having an anionic group with an isocyanate group of a polyisocyanate compound; and a nonionic hydrophilized polyisocyanate compound (X4-1-2) obtained by reacting a hydrophilic polyether alcohol such as a polyoxyethylene monoalcohol with a polyisocyanate compound. These may be used alone or in combination of two or more thereof.

The active hydrogen group-containing compound having an anionic group encompasses a compound which has an anionic group such as a carboxyl group, a sulfonic acid group, a phosphate group, or a betaine structure containing group, and can react with an isocyanate group: and of which example is a compound having an active hydrogen group such as a hydroxyl group or an amino group. Reaction between such compound and a polyisocyanate compound can impart hydrophilicity to the polyisocyanate compound. The anionic hydrophilized polyisocyanate compound (X4-1-1) is preferably a compound having a sulfonic acid group.

The aqueous 2-package type first colored paint (X) may contain, appropriately as needed, paint additives such as pigments such as coloring pigments and body pigments, curing agents other than the polyisocyanate compound (X4) such as a melamine resin, curing catalysts, thickening agents, ultraviolet absorbers, photostabilizers, anti-foaming agents, plasticizers, organic solvents, surface modification agents, and anti-settling agents.

The aqueous 2-package type first colored paint (X) can be applied on a substrate by a known method such as air spray coating, airless spray coating, rotary atomization coating or curtain coating, and an electrostatic charge may be applied during the coating. Among these, the methods of air spray coating, rotary atomization coating and the like are preferable. The coating amount of the aqueous 2-package type first colored paint (X) is preferably an amount at which the thickness of a cured film is generally 10 to 15 $\mu$m, preferably 10 to 40 $\mu$m.

STEP (2)

In step (2) of the present disclosure, an aqueous 1-package type white paint (Y-1) is applied on the uncured first colored coating film obtained in step (1) so as to form an uncured white coating film.

The aqueous 1-package type white paint (Y-1) used in the present disclosure preferably contains a hydroxyl group-containing polyester resin (Y1), a hydroxyl group-containing acrylic resin (Y2), a hydroxyl group-containing polyurethane resin (Y3), and a melamine resin (Y4). The aqueous 1-package type white paint (Y-1) can be prepared by dispersing these resin components and colored components such as coloring pigments and luster pigments in an aqueous medium.

As the hydroxyl group-containing polyester resin (Y1), the hydroxyl group-containing acrylic resin (Y2), and the hydroxyl group-containing polyurethane resin (Y3), those explained above for the hydroxyl group-containing polyester resin (X1), the hydroxyl group-containing acrylic resin (X2), and the hydroxyl group-containing polyurethane resin (X3) can be used respectively as appropriate.

The melamine resin (Y4) may be a butyl/methyl mixed ether-modified melamine resin having a weight average molecular weight in a range of 1,500 to 3,000, preferably 1,500 to 2,500, more preferably 1,500 to 2,000. It is preferable that the mixed ether-modified melamine resin generally has an abundance molar ratio of butyl ether groups/methyl ether groups within a range of 4/6 to 9/1, particularly 5/5 to 9/1.

Examples of the coloring pigments used in the aqueous 1-package type white paint (Y-1) include titanium oxide, zinc oxide, and carbon black.

The aqueous 1-package type white paint (Y-1) may contain additives for paints as appropriate such as body pigments, curing agents other than the melamine resin (Y4), curing catalysts, thickening agents, ultraviolet absorbers, photostabilizers, anti-foaming agents, plasticizers, organic solvents, surface modification agents, and anti-settling agents.

The aqueous 1-package type white paint (Y-1) can be applied on the first colored coating film by a method known per se such as air spray coating, airless spray coating, rotary atomization coating, or curtain coating, and an electrostatic charge may be applied during the coating. Among these, the methods of air spray coating, rotary atomization coating and the like are preferable. The coating amount of the aqueous 1-package type white paint (Y-1) is preferably an amount at which the thickness of a cured film is generally 5 to 30 $\mu$m, and more preferably 10 to 20 $\mu$m.

According to the present disclosure, it is desirable that the uncured white coating film of the aqueous 1-package type white paint (Y-1) has water absorption of 6.5% or less at 20°C from the viewpoint of finished appearance and the like.

The water absorption of the uncured white coating film is measured as follows. In conjunction with normal application on a substrate to be coated, the aqueous 1-package type white paint (Y-1) was also applied on an OHP film (XEROX FILM No.V515, available from Fuji Xerox Co., Ltd.) cut into a size of 10 cm × 15 cm, of which mass (W1) was measured in advance. After preheating the OHP film as necessary, the mass (W2) of the OHP film coated with the aqueous 1-package type white paint (Y-1) was measured according to the time of application of a clearcoat paint. Thereafter, the OHP film coated with the aqueous 1-package type white paint (Y-1) was immersed in deionized water at 20°C for 5 minutes and then removed from the water. After gently wiping excess water on the film with filter paper, the mass of the OHP film was measured (W3). The water absorption is calculated from the mass measurement results of W1 to W3 by the following equation (1).

$$\text{Water absorption (\%)} = \{(W3 - W2)/(W2 - W1)\} \times 100 \ (1)$$

STEP (3)

In step (3) of the disclosure, an aqueous 1-package type interference color paint (Y-2) is applied on the uncured white coating film obtained in step (2) so as to form an uncured interference color coaling film.

The aqueous 1-package type interference color paint (Y-2) contains a vehicle-forming resin (A) and titanium oxide-coated synthetic mica (B).

The vehicle-forming resin (A) preferably includes a base resin and a crosslinker in combination. The base resin may be an acrylic resin, a polyester resin, an alkyd resin, a polyurethane resin or the like, for example. These may be used alone or in combination of two or more thereof. The base resin preferably has a crosslinkable functional group such as a hydroxyl group.

Examples of the crosslinker include an amino resin, a polyisocyanate compound, a blocked polyisocyanate compound, an epoxy group-containing compound, a carboxyl group-containing compound, a carbodiimide group-containing compound, a hydrazide group-containing compound, and a semicarbazide group-containing compound. Among these, the crosslinker is preferably an amino resin, a polyisocyanate compound or a blocked polyisocyanate compound, which are capable of reacting with hydroxyl groups, or a carbodiimide group-containing compound, which is capable of reacting with carboxyl groups. The above-exemplified crosslinkers may be used alone or in combination of 2 or more.

The aqueous 1-package type interference color paint (Y-2) contains 27 to 33 parts by mass of the titanium oxide-coated synthetic mica (B) based on 100 parts by mass of the vehicle-forming resin (A), and has a paint solid content of 20 to 24% by mass.

The vehicle-forming resin (A) may be dissolved or dispersed in a solvent such as an organic solvent and/or water for use.

The titanium oxide-coated synthetic mica (B) is a pigment of which base material is synthetic mica, the surface of the base material being coated with titanium oxide. Synthetic mica is a substance that is synthesized by heating an industrial raw material such as $SiO_2$, $MgO$, $Al_2O_3$, $K_2SiF_6$, or $Na_2SiF_6$ to fuse it at a high temperature of about 1,500 °C, and cooling it to crystallize it. In comparison with natural mica, synthetic mica contains fewer impurities and has a uniform size and thickness and high whiteness. Specifically, known as the base material of synthetic mica are fluorine-gold mica ($KMg_3AlSi_3O_{10}F_2$), potassium-tetrasilicon mica ($KMg_{2.5}AlSi_4O_{10}F_2$), sodium-tetrasilicon mica ($NaMg_{2.5}AlSi_4O_{10}F_2$), Na-teniolite ($NaMg_2LiSi_4O_{10}F$), LiNa teniolite ($LiMg_2LiSi_4O_{10}F_2$) and the like. Synthetic mica expresses interference colors depending on the thickness of a coating.

STEP (4)

In step (4) of the disclosure, a solvent-based 2-package type clear paint (Z) is applied on the uncured interference color coating film obtained in step (3) so as to form an uncured clear coating film.

The solvent-based 2-package type clear paint (Z) contains a hydroxyl group-containing acrylic resin (Z1) and a polyisocyanate compound (Z2) in a ratio of 1.5 to 2.0 equivalents of isocyanate groups in the polyisocyanate compound (Z2) relative to 1 equivalent of hydroxyl groups in the hydroxyl group-containing acrylic resin (Z1).

The hydroxyl group-containing acrylic resin (Z1) can be usually produced by copolymerizing a hydroxyl group-containing unsaturated monomer and another unsaturated monomer copolymerizable therewith by a conventional method. The hydroxyl group-containing unsaturated monomer is a compound having at least one hydroxyl group and at least one polymerizable unsaturated bond per molecule. Examples of the hydroxyl group-containing unsaturated monomer include a monoesterified product of (meth)acrylic acid such as 2-hydroxyethyl (meth)acrylate, 2-hydroxypropyl (meth)acrylate, 3-hydroxypropyl (meth)acrylate, or 4-hydroxybutyl (meth)acrylate and a dihydric alcohol having 2 to 8 carbon atoms; an ε-caprolactone modified product of a monoesterified product of (meth)acrylic acid and a dihydric alcohol having 2 to 8 carbon atoms; allyl alcohol; and (meth) acrylate having a polyoxyethylene chain with a hydroxyl group at a molecular end.

Examples of the aforementioned another unsaturated monomer copolymerizable with the hydroxyl group-containing unsaturated monomer include alkyl esters or cycloalkyl esters having 1 to 24 carbon atoms of (meth)acrylic acid such as methyl(meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, cyclohexyl (meth)acrylate, lauryl (meth)acrylate, and isobornyl (meth)acrylate; (meth)acrylic acid, maleic acid, crotonic acid, β-carboxyethyl acrylate; glycidyl (meth)acrylate, acrylonitrile, acrylamide, styrene, and vinyltoluene. These may be used alone or in combination of two or more thereof.

The hydroxyl group-containing acrylic resin (Z1) preferably has a hydroxyl value within a range of 80 to 200 mg KOH/g, specifically 90 to 170 mg KOH/g, especially 100 to 140 mg KOH/g; and an acid value within a range of 1 to 40 mg KOH/g, specifically 3 to 30 mg KOH/g, especially 5 to 20 mg KOH/g from the viewpoints of the finished appearance such as smoothness and distinctness of image as well as the performance of the coating film such as weather resistance. The hydroxyl group-containing acrylic resin (Z1) preferably has a weight average molecular weight in a range of 4,000 to 20,000, specifically 6,000 to 16,000, especially 8,000 to 12,000 from the viewpoints of the finished appearance such as smoothness and distinctness of image as well as the performance of the coating film such as weather resistance.

The polyisocyanate compound (Z2) contains a polyisocyanate compound having a uretdione structure and a compound of a trimer or more of diisocyanate in a mass ratio of solid content within a range of 10/90 to 50/50, preferably 15/85 to 40/60, and more preferably 15/85 to 35/65. If the mass ratio of the polyisocyanate compound having a uretdione structure and the compound of a trimer or more of diisocyanate is out of those ranges, the curability of a completed multilayer coating film becomes insufficient, resulting in inadequate performance of the coating film. The mass ratio outside the ranges is not desirable.

The polyisocyanate compound having a uretdione structure may preferably be a uretdione of hexamethylene diisocyanate produced by a method known per se. As the compound of a trimer or more of diisocyanate, an isocyanurate, biuret, or allophanate of diisocyanate such as hexamethylene diisocyanate or isophorone diisocyanate can be used, for example.

The use ratio of the hydroxyl group-containing acrylic resin (Z1) and the polyisocyanate compound (Z2) is preferably selected so as to be 1.5 to 1.9 equivalents of isocyanate groups in the polyisocyanate compound (Z2) relative to 1 equivalent of hydroxyl groups in the hydroxyl group-containing acrylic resin (Z1) from the viewpoint of ensuring the curability of the multilayer coating film.

The solvent-based 2-package type clear paint (Z) may contain polysiloxane modified silica particles (Z3) having a mean primary particle diameter of 1 to 40 nm, if necessary from the viewpoint of scratch resistance.

The polysiloxane modified silica particles (Z3) are silica particles having a structure in which the particle surface is modified by a polysiloxane chain. The polysiloxane modified silica particles (Z3) may be any conventionally known one such as commercially available products including "NANOBYK-3650", "NANOBYK-3651" and "NANOBYK-3652" (trade names, available from BYK-Chemie GmbH).

The mean primary particle diameter means a particle diameter at which the cumulative particle size distribution is 50% from the small particle size side in the volume-based particle size distribution (D50).

The solvent-based 2-package type clear paint (Z) may contain as needed a coloring pigment to the extent that it does not interfere with transparency. The solvent-based 2-package type clear paint (Z) may further contain body pigments, ultraviolet absorbers, photostabilizers, anti-foaming agents, thickening agents, rust inhibitors, surface modification agents or the like as appropriate.

The solvent-based 2-package type clear paint (Z) can be applied on the second colored coating film by a method known per se such as air spray coating, airless spray coating, rotary atomization coating or curtain coating, and an electrostatic charge may be applied during the coating. Among these, the methods of air spray coating, rotary atomization coating and the like are preferable. The coating amount of the solvent-based 2-package type clear paint (Z) is preferably an amount at which the thickness of a cured film is generally 25 to 50 μm, preferably 30 to 45 μm.

STEP (5)

In step (5) of the present disclosure, the uncured first colored coating film, the uncured white coating film, the uncured interference color coating film, and the uncured clear coating film formed in steps (1) to (4) are heated at 75 to 100°C so as to simultaneously cure these coating films.

The curing of the uncured first colored coating film, the uncured white coating film, the uncured interference color coating film, and the uncured clear coating film can be performed by ordinary means for baking coating films such as hot air heating, infrared radiation heating and high-frequency heating. The heating time is not particularly limited, but preferably it is usually about 10 to 60 minutes, especially about 15 to 40 minutes. Such heating can simultaneously cure a multilayer coating film formed of the uncured first colored coating film, the uncured white coating film, the uncured interference color coating film, and the uncured clear coating film.

More preferably, the heating temperature is between 80°C and 90°C.

The multilayer coating film formed by steps (1) to (5) of the disclosure has a lightness in highlight (L* (15°)) of 125 to 130, a flip-flop (L* (15°) - L* (110°)) of 45 to 55, and a b-value in highlight (b* (15°)) of -2.0 to -1.0, the multilayer coating film having a whitish color and excellent brilliance when measured by a multi-angle spectrophotometer.

The brightness L* (15°) value in highlight is an L* value obtained by: irradiating measurement light from an angle of 45° with respect to an axis perpendicular to a surface of a measurement target; and conducting a measurement of light at a light receiving angle of 15° from the specular reflection angle toward the measurement light using a multi-angle spectrocolorimeter (trade name "MA68II", available from X-Rite, Inc.). The higher L* (15°) value, the higher the lightness of the resulting coating film, i.e., the whiter the resulting coating film.

The flip-flop (L* (15°) - L* (110°)) refers to the degree of change in reflected light intensity when the observation angle (the light receiving angle) is changed. Hereinafter, the flip-flop value may be abbreviated as an FF value.

The FF value is obtained by measuring the L values (the lightness) at light receiving angles of 15° and 110° using the multi-angle spectrocolorimeter (trade name "MA68II", available from X-Rite, Inc.) and calculating with the following formula.

$$\text{FF value} = \text{L value of light receiving angle } 15° - \text{L value of light receiving angle } 110°$$

The larger the FF value, the greater the change in L value (the lightness) according to the observation angle (the light receiving angle), which indicates that the coating film has excellent flip-flop property.

In the present disclosure, "excellent flip-flop property" means that when the coating film is visually observed, the lightness is high in the vicinity of the direction of the specular reflection (highlight) while the hue is clearly seen from an oblique direction, and the difference in lightness therebetween is large. In other words, a coating film with excellent flip-flop property is a coating film whose lightness changes remarkably depending on the observation angle.

The b-value in highlight (b* (15°)) is a b-value at a light receiving angle of 15°, which was measured according to the procedure of JIS Z 8729 (2004) using the multi-angle spectrocolorimeter (trade name "MA68II", available from X-Rite, Inc.). Specifically, the b-value in highlight is a b* value obtained by: irradiating measurement light from an angle of 45° with respect to an axis perpendicular to a surface of a measurement target; and conducting a measurement of light at a light receiving angle of 15° from the specular reflection angle toward the measurement light.

The multilayer coating film obtained by the method for forming a multilayer coating film of the present disclosure is a whitish coating film having excellent designability as described above, and is excellent in smoothness, water resistance tests (blisters, adhesion) and Recoat adhesion as described later.

[Examples]

The present disclosure will now be explained in detail by means of Examples and Comparative examples. However, the present disclosure is in no way limited to these Examples. Note that both "parts" and "%" are on a mass basis.

<Production of Aqueous 2-package type first colored paint (X)>

[Production Example 1]

A pigment dispersion paste was obtained by: mixing 44.2 parts of a hydroxyl group-containing polyester resin solution (a) (20 parts of solid resin content), 60 parts of "JR-806" (trade name, available from TAYCA CORPORATION, rutile-type titanium dioxide), 1 part of "Carbon MA-100" (trade name, available from Mitsubishi Chemical Corporation, carbon black), 30 parts of "Variace B-35" (trade name, available from SAKAI CHEMICAL INDUSTRY CO., LTD., barium sulfate powder, mean primary particle diameter of 0.5 μm), 5 parts of "MICRO ACE S-3" (trade name, available from NIPPON TALC Co., Ltd., talc powder, mean primary particle diameter of 4.8 μm), and 45 parts of deionized water; adjusting the pH to 8.0 by means of 2-(dimethylamino)ethanol; and dispersing the mixture in a paint shaker for 30 minutes.

Next, 180 parts of the obtained pigment dispersion paste (20 parts of resin solid content), 66.7 parts of a hydroxyl group-containing acrylic resin dispersion (b) (20 parts of resin solid content), 11.1 parts of the hydroxyl group-containing polyester resin solution (a) (5 parts of resin solid content), 78 parts of "UCOAT UX-5210" (trade name, available from Sanyo Chemical Industries, Ltd., polycarbonate-based aqueous polyurethane resin, solid content of 32%) (25 parts of resin solid content), 0.1 part of tin catalyst "Scat-1W" (available form DAIICHI SANKYO CHEMICAL PHARMA CO., LTD., trade name, butyltin-based compound), 2-(dimethylamino)ethanol, and deionized water were added. Then, the pH was adjusted. Further, a sulfonic acid-modified polyisocyanate compound solution (c) was uniformly mixed in an amount such that the NCO/OH ratio was 1.7. Thus, an aqueous first colored paint (X-1) having a pH of 8.0 and a viscosity of 55 seconds at 20°C using a No. 4 Ford cup was obtained.

Here, the hydroxyl group-containing polyester resin solution (a), the hydroxyl group-containing acrylic resin dispersion (b), and the sulfonic acid-modified polyisocyanate compound solution (c) of Production Example 1 will be described.

Hydroxyl group-containing polyester resin solution (a)

In a reaction vessel equipped with a temperature gauge, a thermostat, a stirrer, a reflux condenser and a water separator, 174 parts of trimethylolpropane, 327 parts of neopentyl glycol, 352 parts of adipic acid, 109 parts of isophthalic acid, and 101 parts of hexahydrophthalic anhydride were charged and heated over the course of 3 hours so as to raise the temperature from 160°C to 230°C. The temperature of 230°C was maintained while distilling generated condensation water by the water separator, and the reaction was allowed to progress until the acid value reached 3 mg KOH/g or less. To this reaction product, 59 parts of trimellitic anhydride was added. The addition reaction was allowed to progress for 30 minutes at 170°C. Then, 2-(dimethylamino)ethanol was added in an amount of equivalents relative to the acid groups to neutralize the reaction, and deionized water was gradually added to disperse the mixture in the water. Thus, a hydroxyl group-containing polyester resin solution having a solid content concentration of 45% and a pH of 7.2 was obtained. The obtained hydroxyl group-containing polyester resin had an acid value of 35 mg KOH/g, and a hydroxyl value of 130 mg KOH/g.

Hydroxyl group-containing acrylic resin dispersion (b)

In a reaction vessel equipped with a temperature gauge, a thermostat, a stirrer, a reflux condenser, a nitrogen inlet tube and a dropping device, 130 parts of deionized water and 0.52 parts of "AQUALON KH-10" (trade name, available from DKS Co. Ltd.) were charged, stirred and mixed in a gas stream of nitrogen, and heated to 80°C. Next, 1% of the total quantity of a monomer emulsion (1) described below and 5.3 parts of a 6% ammonium persulfate aqueous solution were introduced into the reaction vessel, and it was maintained at a temperature of 80°C for 15 minutes. Thereafter, the remainder of the monomer emulsion (1) was added dropwise over the course of 3 hours into the reaction vessel maintained at the said temperature. After the completion of the dropwise addition, the mixture in the vessel was allowed to age for 1 hour. A monomer emulsion (2) described below was then added dropwise in the vessel over the course of 1 hour, and the mixture was allowed to age for 1 hour. The mixture was then cooled to 30°C while gradually adding 40 parts of a 5% dimethylethanolamine aqueous solution in the reaction vessel, and filtered through a 100 mesh nylon cloth such that its filtrate was discharged. Thus, the hydroxyl group-containing acrylic resin dispersion was obtained, the dispersion having: a mean particle diameter of 100 nm (measured at 20°C after being diluted with deionized water by using a submicron particle size distribution measurement device "COULTERN4" [trade name, available from Beckman Coulter, Inc.]); and a solid content concentration of 30%. The obtained hydroxyl group-containing acrylic resin had an acid value of 33 mg KOH/g, and a hydroxyl value of 25 mg KOH/g.

-Monomer emulsion (1)-

The monomer emulsion (1) was obtained by mixing and stirring 42 parts of deionized water, 0.72 parts of "Aqualon KH-10", 2.1 parts of methylene bisacrylamide, 2.8 parts of styrene, 16.1 parts of methyl methacrylate, 28 parts of ethyl acrylate, and 21 parts of n-butyl acrylate.

-Monomer emulsion (2)-

The monomer emulsion (2) was obtained by mixing and stirring 18 parts of deionized water, 0.31 parts of "Aqualon KH-10", 0.03 parts of ammonium persulfate, 5.1 parts of methacrylic acid, 5.1 parts of 2-hydroxyethyl acrylate, 3 parts of styrene, 6 parts of methyl methacrylate, 1.8 parts of ethyl acrylate, and 9 parts of n-butyl acrylate.

Sulfonic acid-modified polyisocyanate compound solution (c)

A sulfonic acid-modified polyisocyanate compound solution having a solid content of 80% and an NCO content of 16.0% was obtained by stirring 970 g (5.00 mol) of hexamethylene diisocyanate (HDI)-based polyisocyanate containing isocyanurate groups with an NCO content of 21.7%, an average NCO functionality of 3.5 (by GPC), a monomer HDI content of 0.1% and a viscosity of 3,000 mPa·s (23°C); 30 g (0.14 mol) of 3-(cyclohexylamino)propanesulfonic acid; 17.4 g (0.14 mol) of dimethylcyclohexylamine; and 254 g of 1-methoxypropyl 2-acetate under dry nitrogen at 80°C for 5 hours to allow reaction therebetween.

[Production Example 2]

An aqueous first colored paint (X-2) was obtained in the same manner as in Production Example 1, except that the amount of the sulfonic acid-modified polyisocyanate compound solution (c) was set to have an NCO/OH ratio of 1.5.

[Production Example 3]

An aqueous first colored paint (X-3) was obtained in the same manner as in Production Example 1, except that the amount of the sulfonic acid-modified polyisocyanate compound solution (c) was set to have an NCO/OH ratio of 1.3.

<Production of Aqueous 1-liquid type white paint (Y-1)>

[Production Example 4]

A pigment dispersion paste was obtained by: mixing 44.2 parts of the hydroxyl group-containing polyester resin solution (a) (20 parts of solid resin content), 100 parts of "JR-806" (trade name, available from TAYCA CORPORATION, rutile-type titanium dioxide), and 45 parts of deionized water; adjusting the pH to 8.0 by means of 2-(dimethylamino)ethanol; and dispersing the mixture in a paint shaker for 30 minutes.

Next, to 189.2 parts of the obtained pigment dispersion paste (20 parts of resin solid content), and 7.1 parts of the hydroxyl group-containing polyester resin solution (d) (5 parts of resin solid content), 12.5 parts of melamine resin (methyl-butyl mixed etherified melamine resin) having a solid content of 80% (10 parts of solid resin content), 183 parts of the hydroxyl group-containing acrylic resin dispersion (b) (55 parts of solid resin content), and 31 parts of "UCOAT UX-5210" (trade name, available from Sanyo Chemical Industries, Ltd., polycarbonate-based aqueous polyurethane resin, solid content of 32%) (10 parts of resin solid content) were added while stirring. Further, dimethylethanolamine and deionized water were added to adjust such that the pH is 8.0 and the viscosity is 50 seconds at 20°C by measurement using a No. 4 Ford Cup. An aqueous white paint (Y-1-1) was thus obtained. The water absorption of an uncured white coating film of this paint was 5.7% at 20°C.

Here, a hydroxyl group-containing polyester resin (d) in Production Example 4 described above will be described.

Hydroxyl group-containing polyester resin (d)

In a reaction vessel equipped with a temperature gauge, a thermostat, a stirrer, a reflux condenser and a water separator, 109 parts of trimethylolpropane, 141 parts of 1,6-hexanediol, 126 parts of hexahydrophthalic anhydride, and 120 parts of adipic acid were charged and heated over the course of 3 hours so as to raise the temperature from 160°C to 230°C. The condensation reaction was allowed to progress at 230°C for 4 hours. Next, in order to add carboxyl groups to the obtained condensation reaction product, 38.3 parts of trimellitic anhydride was further added. The mixture was allowed to react for 30 minutes at 170°C, and then diluted with 2-ethyl-1-hexanol. Thus, the hydroxyl group-containing polyester resin solution having a resin solid concentration of 70% was obtained. The obtained hydroxyl group-containing polyester resin had an acid value of 46 mg KOH/g, and a hydroxyl value of 150 mg KOH/g.

<Production of Aqueous 1-liquid type interference color paint (Y-2)>

[Production Example 5]

To 35.7 parts of the hydroxyl group-containing polyester resin (d) (25 parts of resin solid content), 12.5 parts of melamine resin (methyl-butyl mixed etherified melamine resin) having a solid content of 80% (10 parts of solid resin content), 183 parts of the hydroxyl group-containing acrylic resin dispersion (b) (55 parts of solid resin content), and 31 parts of "UCOAT UX-5210" (trade name, available from Sanyo Chemical Industries, Ltd., polycarbonate-based aqueous polyurethane resin, solid content of 32%) (10 parts of resin solid content) were added while stirring. Then, 30 parts of a light interference pigment "ULTIMICA SC-100SO" (trade name, available from NIHON KOKEN KOGYO CO.,LTD., titanium oxide-coated synthetic mica pigment) was added while stirring to be mixed and dispersed in the mixture. Further, "PRIMAL ASE-60" (trade name, available from The Dow Chemical Company, a thickener), dimethylethanolamine, and deionized water were added to adjust such that the pH is 8.0, the paint solid content is 23%, and the viscosity is 45 seconds at 20°C by measurement using a No. 4 Ford Cup. An aqueous interference color paint (Y-2-1) was thus obtained.

[Production Examples 6 to 13]

Aqueous interference color paints (Y-2-2) to (Y-2-9) having a pH of 8.0 and a viscosity of 50 seconds at 20°C using a No. 4 Ford cup were obtained in the same manner as in Production Example 5, except that the types and amounts of the light interference pigment and the paint solid content were changed as shown in Table 1 below.

[Table 1]

| | | | Production Examples | | | | | | | | |
|---|---|---|---|---|---|---|---|---|---|---|---|
| | | | 5 1 | 6 | 7 | 8 | 9 | 10 | 11 | 12 | 13 |
| Aqueous interference color paint (Y-2) name | | | Y-2-1 | Y-2-2 | Y-2-3 | Y-2-4 | Y-2-5 | Y-2-6 | Y-2-7 | Y-2-8 | Y-2-9 |
| Light interference pigment | Titanium oxide-coated synthetic mica (B) | "ULTIMICA SC-100SO" | 30 | 28 | 32 | 30 | 25 | 35 | | 30 | 30 |
| | Titanium oxide-coated natural mica | "Iriodin 103WNT" (Note 1) | | | | | | | 30 | | |
| Solid content of Paint [%] | | | 23 | 23 | 23 | 21 | 23 | 23 | 23 | 18 | 26 |
| (Note 1) in Table 1: Trade name "Iriodin 103WNT" (available from Merck Ltd., Titanium oxide-coated natural mica pigment) | | | | | | | | | | | |

<Production of Solvent-based 2-package type clear paint (Z)>

[Production Example 14]

An isocyanate crosslinking agent (Z2-1) (consisting of hexamethylene diisocyanate uretdiones of 20% and trimers or more of 80%, NCO content of 20%, viscosity of 800 mPa s at 25°C) was uniformly mixed with 70 parts of a hydroxyl group-containing acrylic resin (e) by solid content mass in an amount such that the NCO/OH ratio was 1.7. The mixture was then mixed with an organic solvent (a SOLVESSO 100/methoxypropylacetate equal-mass mixture). Thus, a clear paint (Z-1) adjusted so as to have a viscosity of 20 seconds at 20°C by measurement using a No. 4 Ford Cup was obtained.
Here, the hydroxyl group-containing acrylic resin (e) in Production Example 14 will be described.

Hydroxyl group-containing acrylic resin (e)

The hydroxyl group-containing acrylic resin (e) is an acrylic resin having a hydroxyl value of 120 mg KOH/g and a weight average molecular weight of 8,000 which is obtained by radical polymerization reaction between 25 parts of styrene, 20 parts of n-butyl methacrylate, 30 parts of n-butyl acrylate, 24 parts of hydroxyethyl methacrylate and 1 part of acrylic acid using a conventional method.

[Production Example 15]

A clear paint (Z-2) was obtained in the same manner as in Production Example 14, except that the amount of the isocyanate crosslinking agent (Z2-1) was set such that the NCO/OH ratio was 1.5.

[Production Example 16]

A clear paint (Z-3) was obtained in the same manner as in Production Example 14, except that 2 parts of "NANOBYK-3652" (trade name, linear alkyl group-modified polydimethylsiloxane-modified silica particle dispersion, mean particle diameter of 20 nm, solid content concentration of 31% [silica particle concentration of 25%], available from BYK) were added.

[Production Example 17]

An isocyanate crosslinking agent (Z2-2) (consisting of hexamethylene diisocyanate uretdiones of less than 1% and trimers or more of 99% or more, NCO content of 20%, viscosity of 1,200 mPa s at 25°C) was uniformly mixed with 70 parts of the hydroxyl group-containing acrylic resin (e) by solid content mass in an amount such that the NCO/OH ratio was 1.7. The mixture was then mixed with an organic solvent (a toluene/xylene equal-mass mixture). Thus, a clear paint (Z-4) adjusted so as to have a viscosity of 14 seconds at 20°C by measurement using a No. 4 Ford Cup was obtained.

[Production Example 18]

A clear paint (Z-5) was obtained in the same manner as in Production Example 14, except that the amount of the isocyanate crosslinking agent (Z2-1) was set such that the NCO/OH ratio was 1.2.

[Production Example 19]

A clear paint (Z-6) was obtained in the same manner as in Production Example 14, except that the amount of the isocyanate crosslinking agent (Z2-1) was set such that the NCO/OH ratio was 2.2.

[Examples 1 to 10 and Comparative examples 1 to 8]

(Preparation of Test Sheets 1 and 2)

As a metal member, a zinc phosphate-treated cold rolled steel sheet (450 mm × 300 mm × 0.8 mm) was electrodeposition-coated with a thermosetting epoxy resin based cationic electrodeposition paint composition (trade name, "Elecron NT-360", available from Kansai Paint Co., Ltd.) so as to form a film having a thickness of 20 μm, and heated for 30 minutes at 170°C to cure.

As a plastic member, a polypropylene sheet (which had been degreased) was air-spray coated with a primer "SOFLEX 3100" (trade name, available from Kansai Paint Co., Ltd.) so as to have a dried film with thickness of 7 μm, and heated for 30 minutes at 80°C to cure. The surfaces of the metal member and the plastic member were then degreased. These members were arranged adjacent to each other to form a test sheet 1.

As another plastic member, a NORYL GTX sheet (which had been degreased) was air-spray coated with a primer "SOFLEX 3100" (trade name, Kansai Paint Co., Ltd.) so as to have a dried film with thickness of 7 μm, and heated for 30 minutes at 80°C to cure. The surfaces of the metal member and this plastic member were then degreased. These members were arranged adjacent to each other to form a test sheet 2.

(Preparation of Coated Test Sheet)

The aqueous first colored paints (X-1) to (X-3) were electrostatically applied on the test sheets in the combinations shown in Table 2 so as to have a dried film with thickness of 20 μm, and were allowed to set at room temperature for 3 minutes. Then, the aqueous white paint (Y-1-1) was electrostatically applied so as to have a dried film with thickness of 10 μm, allowed to stand at room temperature for 2 minutes. Next, the aqueous interference color paints (Y-2-1) to (Y-2-9) were electrostatically applied so as to have a dried film with thickness of 10 μm, allowed to stand at room temperature for 3 minutes, and then pre-dried at 80°C for 5 minutes. Subsequently, the clear paints (Z-1) to (Z-6) were electrostatically applied so as to have a dried film with thickness of 35 μm, allowed to stand at room temperature for 5 minutes, and heated in an oven at 85°C for 20 minutes. Coated test sheets with a multilayer coating film formed thereon were thus obtained.

[Evaluation]

The coated test sheets of the Examples and Comparative examples were subjected to coating film performance tests described below. The evaluation results are also shown in Table 2.

(Smoothness)

Finished appearance of each coated test sheet was evaluated in terms of smoothness. The smoothness was evaluated based on the following criteria using Wd-values measured by "Wave Scan DOI" (trade name, available from BYK-Gardner). The smaller the Wd value, the better the smoothness of the coated surface.

-Evaluation Criteria-

AA: Wd value is less than 5.0.

A: Wd value is 5.0 or more and 10.0 or less.
B: Wd value exceeds 10.0.

(Water resistance test: blisters)

A partial portion of each coated test sheet was cut out from the sheet. Each portion was immersed in warm water at 40°C for 10 days, then pulled up from the water and dried. The coated surface of each portion having been pulled up from the water was visually observed. Occurrence of blisters was evaluated according to the following criteria.

-Evaluation Criteria-

A: No blister occurred.
B: Some blisters occurred.
C: Blisters occurred on the overall surface.

(Water resistance test: adhesion)

A partial portion of each coated test sheet was cut out from the sheet. Each portion was immersed in warm water at 40°C for 10 days, then pulled up from the water and dried. The adhesion of each portion was evaluated as follows.
Cut lines were made on the surface of the coating film of each coated test sheet such that the cut lines reached the substrate to make 100 squares with a size of 2 mm $\times$ 2 mm. Adhesive cellophane tape was adhered on the coating film surface and sharply peeled off at 20°C. The number of residual squares of the coating film was counted. The adhesion was evaluated according to the following criteria.

-Evaluation Criteria-

AA: 100 squares (no square peeled)
A: 100 squares (including squares partially peeled)
B: 51 squares or more and 99 squares or less
C: 50 squares or less

(Recoat adhesion)

The coated test sheets were allowed to stand at room temperature for 7 days. The same paints were repainted on the surface of each coated test sheet and cured. After allowing the recoated test sheets to stand at room temperature for 3 days, the recoated test sheets were subjected to the adhesion evaluation described above. The number of residual squares of the coating film was counted. The recoat adhesion was evaluated according to the following criteria.

-Evaluation Criteria-

AA: 100 squares (no square peeled)
A: 100 squares (including squares partially peeled)
B: 51 squares or more and 99 squares or less
C: 50 squares or less

(Designability)

The L* (15°) and the b* (15°) at a light receiving angle of 15° as well as the L* (110°) at a light receiving angle of 110° of each coated test sheet were measured using "MA6811" (trade name, available from X-Rite, Inc.) to evaluate the lightness (L* (15°)) in highlight, the flip-flop (L* (15°) - L* (110°)) and the b* value (b* (15°)) in highlight of the coating films using "MA68II" (trade name, available from X-Rite, Inc.). More specifically, measurement light was irradiated from an angle of 45° with respect to an axis perpendicular to a surface of a measurement target; and the L* and the b* of light received at an angle of 15° from the specular reflection angle toward the measurement light.

[Table 2]

| | | Examples | | | | | | | | | |
|---|---|---|---|---|---|---|---|---|---|---|---|
| | | 1 | 2 | 3 | 4 | 5 | 6 | 7 | 8 | 9 | 10 |
| Test sheet type | | 1 | 2 | 1 | 1 | 1 | 1 | 1 | 1 | 2 | 1 |
| Aqueous first paint type | | X-1 | X-1 | X-2 | X-1 | X-1 | X-1 | X-1 | X-1 | X-1 | X-3 |
| Aqueous white paint type | | Y-1-1 | Y-1-1 | Y-1-1 | Y-1-1 | Y-1-1 | Y-1-1 | Y-1-1 | Y-1-1 | Y-1-1 | Y-1-1 |
| Aqueous interference color paint type | | Y-2-1 | Y-2-1 | Y-2-1 | Y-2-2 | Y-2-3 | Y-2-4 | Y-2-1 | Y-2-1 | Y-2-1 | Y-2-1 |
| Clear paint type | | Z-1 | Z-1 | Z-1 | Z-1 | Z-1 | Z-1 | Z-2 | Z-3 | Z-3 | Z-1 |
| Smoothness | | AA | AA | AA | AA | A | AA | AA | AA | AA | AA |
| Water resistance test: blisters | | A | A | A | A | A | A | A | A | A | A |
| Water resistance test: adhesion | | AA | AA | AA | AA | AA | AA | AA | AA | AA | AA |
| Recoat adhesion | | AA | AA | AA | AA | AA | AA | AA | AA | AA | A |
| Designability | Lightness in highlight ($L^*$ (15°)) | 128 | 127 | 127 | 125 | 130 | 129 | 127 | 127 | 127 | 127 |
| | Flip - flop ($L^*$ (15°)-$L^*$ (11 D°)) | 50 | 50 | 50 | 46 | 54 | 52 | 50 | 50 | 50 | 50 |
| | $b^*$ value in highlight ($b^*$ (15°)) | -1.5 | -1.5 | -1.5 | -1.5 | -1.5 | -1.5 | -1.5 | -1.5 | -1.5 | -1.5 |

[Table 3]

| | | Comparative examples | | | | | | | |
|---|---|---|---|---|---|---|---|---|---|
| | | 1 | 2 | 3 | 4 | 5 | 6 | 7 | 8 |
| Test sheet type | | 1 | 1 | 1 | 1 | 1 | 1 | 1 | 1 |
| Aqueous first paint type | | X-1 | X-1 | X-1 | X-1 | X-1 | X-1 | X-1 | X-1 |
| Aqueous white paint type | | Y-1-1 | Y-1-1 | Y-1-1 | Y-1-1 | Y-1-1 | Y-1-1 | Y-1-1 | Y-1-1 |
| Aqueous interference color paint type | | Y-2-5 | Y-2-6 | Y-2-7 | Y-2-8 | Y-2-9 | Y-2-1 | Y-2-1 | Y-2-1 |
| Clear paint type | | Z-1 | Z-1 | Z-1 | Z-1 | Z-1 | Z-4 | Z-5 | Z-6 |
| Smoothness | | AA | B | AA | AA | AA | A | A | AA |
| Water resistance test: blisters | | A | B | A | A | A | B | B | A |
| Water resistance test: adhesion | | AA | B | AA | AA | AA | B | A | AA |
| Recoat adhesion | | AA | AA | AA | AA | AA | AA | AA | B |
| Designability | Lightness in highlight ($L^*$ (15°)) | 123 | 132 | 125 | 123 | 124 | 127 | 127 | 127 |
| | Flip - flop ($L^*$ (15°)-$L^*$ (110°)) | 44 | 56 | 46 | 45 | 47 | 50 | 50 | 50 |
| | $b^*$ value in highlight ($b^*$ (15°)) | -1.5 | -1.5 | -0.5 | -1.5 | -1.5 | -1.5 | -1.5 | -1.5 |

As shown in Table 2, it was found that the Examples produced by the method for forming a multilayer coating film of the present disclosure were excellent in smoothness, water resistance, recoat adhesion, and designability.

On the other hand, Comparative example 1, in which the content of the titanium oxide-coated synthetic mica (B) in the aqueous 1-package type interference color paint type (Y-2) was 25 parts by mass, was inferior in designability.

Comparative example 2, in which the content of the titanium oxide-coated synthetic mica (B) in the aqueous 1-package type interference color paint type (Y-2) was 35 parts by mass, was inferior in smoothness and water resistance tests (blisters, adhesion).

Comparative example 3, in which the titanium oxide-coated natural mica was used in the aqueous 1-package type interference color paint type (Y-2), was inferior in designability.

Comparative example 4, in which the paint solid content of the aqueous 1-package type interference color paint type (Y-2) was 18%, was inferior in designability.

Comparative example 5, in which the paint solid content of the aqueous 1-package type interference color paint type (Y-2) was 26%, was inferior in designability.

Comparative example 6, in which the mass ratio of solid content of a polyisocyanate compound having a uretdione structure and a compound of a trimer or more of diisocyanate in the solvent-based 2-package type clear paint (Z) was less than 1/90, was inferior in water resistance tests (blisters, adhesion).

Comparative example 7, in which the NCO/OH ratio was 1.2 in solvent-based 2-package type clear paint (Z), was inferior in the water resistance test (blisters).

Comparative example 8, in which the NCO/OH ratio was 2.2 in the solvent-based 2-package type clear paint (Z), was inferior in recoat adhesion.

## Claims

1. A method for forming a multilayer coating film, comprising:

   a step (1) of applying an aqueous 2-package type first colored paint (X) on both a metal member and a plastic member of an automobile outer panel so as to form an uncured first colored coating film;
   a step (2) of applying an aqueous 1-package type white paint (Y-1) on the uncured first colored coating film obtained in the step (1) so as to form an uncured white coating film;
   a step (3) of applying an aqueous 1-package type interference color paint (Y-2) on the uncured white coating film obtained in the step (2) so as to form an uncured interference color coating film;
   a step (4) of applying a solvent-based 2-package type clear paint (Z) on the uncured interference color coating film obtained in the step (3) so as to form an uncured clear coating film; and
   a step (5) of heating the uncured first colored coating film, the uncured white coating film, the uncured interference color coating film, and the uncured clear coating film formed in the steps (1) to (4) at 75 to 100°C so as to simultaneously cure these coating films to form a multilayer coating film,
   wherein the steps (1) to (5) are sequentially conducted,
   wherein the aqueous 1-package type interference color paint (Y-2) contains a vehicle-forming resin (A) and titanium oxide-coated synthetic mica (B), the aqueous 1-package type interference color paint (Y-2) containing 27 to 33 parts by mass of the titanium oxide-coated synthetic mica (B) based on 100 parts by mass of the vehicle-forming resin (A), and having a paint solid content of 20 to 24% by mass,
   wherein the solvent-based 2-package type clear paint (Z) contains a hydroxyl group-containing acrylic resin (Z1) and a polyisocyanate compound (Z2) in a ratio of 1.5 to 2.0 equivalents of isocyanate groups in the polyisocyanate compound (Z2) relative to 1 equivalent of hydroxyl groups in the hydroxyl group-containing acrylic resin (Z1), and the polyisocyanate compound (Z2) contains a polyisocyanate compound having a uretdione structure and a compound of a trimer or more of diisocyanate in a mass ratio of solid content of 10/90 to 50/50, and
   wherein the multilayer coating film has a lightness in highlight ($L^*$ (15°)) of 125 to 130, a flip-flop ($L^*$ (15°) - $L^*$ (110°)) of 45 to 55, and a b-value in highlight ($b^*$ (15°)) of -2.0 to -1.0 when measured by a multi-angle spectrophotometer.

2. The method for forming a multilayer coating film according to claim 1, wherein the aqueous 2-package type first colored paint (X) contains a hydroxyl group-containing polyester resin (X1), a hydroxyl group-containing acrylic resin (X2), a hydroxyl group-containing polyurethane resin (X3), and a polyisocyanate compound (X4) in a ratio of 1.5 to 2.0 equivalents of isocyanate groups in the polyisocyanate compound (X4) relative to 1 equivalent of hydroxyl groups in the hydroxyl group-containing polyester resin (X1), the hydroxyl group-containing acrylic resin (X2), and the hydroxyl group-containing polyurethane resin (X3).

**3.** The method for forming a multilayer coating film according to claim 1 or 2,

wherein the aqueous 1-package type white paint (Y-1) contains a hydroxyl group-containing polyester resin (Y1), a hydroxyl group-containing acrylic resin (Y2), a hydroxyl group-containing polyurethane resin (Y3), and a melamine resin (Y4), and
wherein water absorption as measured by the method described in the description of the uncured white coating film is 6.5% or less at 20°C.

**4.** The method for forming a multilayer coating film according to any one of claims 1 to 3, wherein the plastic member is coated with a primer in advance.

**5.** The method for forming a multilayer coating film according to any one of claims 1 to 4, wherein the plastic member is made of a composite material of a polyamide resin and a modified polyphenylene ether resin.

**6.** The method for forming a multilayer coating film according to any one of claims 1 to 5, wherein the solvent-based 2-package type clear paint (Z) further contains polysiloxane modified silica particles (Z3) having a mean primary particle diameter of 1 to 40 nm.

**7.** A multilayer coating film obtained by the method for forming a multilayer coating film according to any one of claims 1 to 6.

**Patentansprüche**

**1.** Verfahren zur Herstellung eines mehrschichtigen Beschichtungsfilms, umfassend:

Schritt (1) des Auftragens einer wässrigen ersten gefärbten Farbe vom 2-Packungs-Typs (X) sowohl auf ein Metallelement als auch auf ein Kunststoffelement einer Kraftfahrzeug-Außenverkleidung, um einen ungehärteten ersten farbigen Beschichtungsfilm zu bilden;
einen Schritt (2) des Auftragens einer wässrigen weißen Farbe vom 1-Packungs-Typ (Y-1) auf den in Schritt (1) erhaltenen ungehärteten ersten farbigen Beschichtungsfilm, um einen ungehärteten weißen Beschichtungsfilm zu bilden;
einen Schritt (3) des Auftragens eines wässrigen Interferenzfarbanstrichs vom 1-Packungs-Typ (Y-2) auf den in Schritt (2) erhaltenen ungehärteten weißen Beschichtungsfilm, um einen ungehärteten Interferenzfarbbeschichtungsfilm zu bilden;
einen Schritt (4) des Auftragens eines lösungsmittelbasierten Klarlacks vom 2-Packungs-Typ (Z) auf den in Schritt (3) erhaltenen ungehärteten Interferenzfarbbeschichtungsfilm, um einen ungehärteten Klarlackfilm zu bilden; und
einen Schritt (5) des Erhitzens des ungehärteten ersten farbigen Beschichtungsfilms, des ungehärteten weißen Beschichtungsfilms, des ungehärteten Interferenzfarbbeschichtungsfilms und des ungehärteten klaren Beschichtungsfilms, die in den Schritten (1) bis (4) gebildet wurden, auf 75 bis 100°C, um diese Beschichtungsfilme gleichzeitig zu härten, um einen mehrschichtigen Beschichtungsfilm zu bilden,
wobei die Schritte (1) bis (5) nacheinander durchgeführt werden,
wobei der wässrige Interferenzfarbanstrich vom 1-Packungstyp (Y-2) ein fahrzeugbildendes Harz (A) und titanoxidbeschichteten synthetischen Glimmer (B) enthält, wobei der wässrige Interferenzfarbanstrich vom 1-Packungstyp (Y-2) 27 bis 33 Masseteile des titanoxidbeschichteten synthetischen Glimmers (B), bezogen auf 100 Masseteile des fahrzeugbildenden Harzes (A), enthält und einen Farbfeststoffgehalt von 20 bis 24 Massenprozent aufweist,
wobei der lösungsmittelbasierte Klarlack vom 2-Packungs-Typ (Z) ein hydroxylgruppenhaltiges Acrylharz (Z1) und eine Polyisocyanatverbindung (Z2) in einem Verhältnis von 1,5 bis 2,0 Äquivalenten Isocyanatgruppen in der Polyisocyanatverbindung (Z2), bezogen auf 1 Äquivalent Hydroxylgruppen in dem hydroxylgruppenhaltigen Acrylharz (Z1) enthält, und die Polyisocyanatverbindung (Z2) eine Polyisocyanatverbindung mit einer Uretdionstruktur und eine Verbindung eines Trimers oder mehr von Diisocyanat in einem Massenverhältnis des Feststoffgehalts von 10/90 bis 50/50 enthält, und
wobei der mehrschichtige Beschichtungsfilm eine Helligkeit im Spitzlicht (L* (15°)) von 125 bis 130, einen Flip-Flop (L* (15°) - L* (110°)) von 45 bis 55 und einen b-Wert im Spitzlicht (b* (15°)) von _2,0 bis _1,0 aufweist, wenn er mit einem Mehrwinkelspektrophotometer gemessen wird.

**2.** Verfahren zur Bildung eines mehrschichtigen Beschichtungsfilms nach Anspruch 1, wobei die wässrige erste gefärbte Farbe vom 2-Packungs-Typ (X) ein hydroxylgruppenhaltiges Polyesterharz (X1), ein hydroxylgruppenhaltiges Acrylharz (X2), ein hydroxylgruppenhaltiges Polyurethanharz (X3) und eine Polyisocyanatverbindung (X4) in einem Verhältnis von 1,5 bis 2,0 Äquivalenten Isocyanatgruppen in der Polyisocyanatverbindung (X4) relativ zu 1 Äquivalent Hydroxylgruppen in dem hydroxylgruppenhaltigen Polyesterharz (X1), dem hydroxylgruppenhaltigen Acrylharz (X2) und dem hydroxylgruppenhaltigen Polyurethanharz (X3) enthält.

**3.** Verfahren zur Herstellung eines mehrschichtigen Beschichtungsfilms nach Anspruch 1 oder 2,

wobei die wässrige weiße Farbe vom 1-Packungstyp (Y-1) ein hydroxylgruppenhaltiges Polyesterharz (Y1), ein hydroxylgruppenhaltiges Acrylharz (Y2), ein hydroxylgruppenhaltiges Polyurethanharz (Y3) und ein Melaminharz (Y4) enthält, und
wobei die Wasserabsorption des ungehärteten weißen Beschichtungsfilms, gemessen nach der in der Beschreibung beschriebenen Methode, 6,5% oder weniger bei 20°C beträgt.

**4.** Verfahren zur Herstellung eines mehrschichtigen Beschichtungsfilms nach einem der Ansprüche 1 bis 3, wobei das Kunststoffteil vorab mit einem Primer beschichtet wird.

**5.** Verfahren zur Herstellung eines mehrschichtigen Beschichtungsfilms nach einem der Ansprüche 1 bis 4, wobei das Kunststoffelement aus einem Verbundmaterial aus einem Polyamidharz und einem modifizierten Polyphenylenetherharz hergestellt ist.

**6.** Verfahren zur Herstellung eines mehrschichtigen Beschichtungsfilms nach einem der Ansprüche 1 bis 5, wobei der lösungsmittelbasierte Klarlack vom 2-Packungs-Typ (Z) ferner mit Polysiloxan modifizierte Silicapartikel (Z3) mit einem mittleren Primärteilchendurchmesser von 1 bis 40 nm enthält.

**7.** Mehrschichtiger Beschichtungsfilm, erhalten durch das Verfahren zur Herstellung eines mehrschichtigen Beschichtungsfilms nach einem der Ansprüche 1 bis 6.

## Revendications

**1.** Procédé de formation d'un film de revêtement multicouche, comprenant :

une étape (1) consistant à appliquer une première peinture colorée aqueuse de type 2 paquets (X) sur un élément métallique et un élément plastique d'un panneau extérieur d'automobile de manière à former un premier film de revêtement coloré non durci ;
une étape (2) consistant à appliquer une peinture blanche aqueuse de type 1 paquet (Y-1) sur le premier film de revêtement coloré non durci obtenu à l'étape (1) de manière à former un film de revêtement blanc non durci ;
une étape (3) consistant à appliquer une peinture interférentielle aqueuse de type 1 paquet (Y-2) sur le film de revêtement blanc non durci obtenu à l'étape (2) de manière à former un film de revêtement de couleur interférentielle non durci ;
une étape (4) consistant à appliquer une peinture transparente à base de solvant de type 2 paquets (Z) sur le film de revêtement interférentiel non durci obtenu à l'étape (3), de manière à former un film de revêtement transparent non durci ; et
une étape (5) consistant à chauffer le premier film de revêtement coloré non durci, le film de revêtement blanc non durci, le film de revêtement de couleur interférentielle non durci et le film de revêtement transparent non durci formés dans les étapes (1) à (4) à une température comprise entre 75 et 100°C de manière à durcir simultanément ces films de revêtement pour former un film de revêtement multicouche,
dans lequel les étapes (1) à (5) sont conduites de manière séquentielle,
dans lequel la peinture interférentielle aqueuse de type 1 paquet (Y-2) contient une résine de formation de véhicule (A) et du mica synthétique recouvert d'oxyde de titane (B), et la peinture interférentielle aqueuse de type 1 paquet (Y-2) contenant 27 à 33 parties en masse de mica synthétique recouvert d'oxyde de titane (B) sur la base de 100 parties en masse de la résine de formation de véhicule (A), et a une teneur en solides de peinture de 20 à 24 % en masse,
dans lequel la peinture transparente à base de solvant de type 2 paquets (Z) contient une résine acrylique contenant un groupe hydroxyle (Z1) et un composé de polyisocyanate (Z2) dans un rapport de 1,5 à 2,0 équivalents de groupes isocyanates dans le composé de polyisocyanate (Z2) par rapport à 1 équivalent de groupes hydroxyles dans la résine acrylique contenant un groupe hydroxyle (Z1), et le composé de polyisocyanate (Z2) contient un composé de polyisocyanate ayant une structure d'urétdione et un composé d'un trimère ou plus de diisocyanate dans un rapport massique de contenu solide de 10/90 à 50/50, et

dans lequel le film de revêtement multicouche a une luminosité dans les hautes lumières (L* (15°)) de 125 à 130, un flip-flop (L* (15°) - L* (110°)) de 45 à 55, et une valeur b dans les hautes lumières (b* (15°)) de -2,0 à -1,0 lorsqu'elle est mesurée par un spectrophotomètre à angles multiples.

2. Procédé de formation d'un film de revêtement multicouche selon la revendication 1, dans lequel la première peinture colorée aqueuse de type 2 paquets (X) contient une résine polyester contenant un groupe hydroxyle (X1), une résine acrylique contenant un groupe hydroxyle (X2), une résine polyuréthane contenant un groupe hydroxyle (X3) et un composé de polyisocyanate (X4) dans un rapport de 1,5 à 2,0 équivalents de groupes isocyanates dans le composé polyisocyanate (X4) par rapport à 1 équivalent de groupes hydroxyles dans la résine polyester contenant un groupe hydroxyle (X1), la résine acrylique contenant un groupe hydroxyle (X2) et la résine polyuréthane contenant un groupe hydroxyle (X3).

3. Procédé de formation d'un film de revêtement multicouche selon la revendication 1 ou 2,

dans lequel la peinture blanche aqueuse de type 1 paquet (Y-1) contient une résine polyester contenant un groupe hydroxyle (Y1), une résine acrylique contenant un groupe hydroxyle (Y2), une résine polyuréthane contenant un groupe hydroxyle (Y3) et une résine de mélamine (Y4), et

dans lequel l'absorption d'eau mesurée par la méthode décrite dans la description du film de revêtement blanc non durci est de 6,5 % ou moins à 20°C.

4. Procédé de formation d'un film de revêtement multicouche selon l'une des revendications 1 à 3, dans lequel l'élément en plastique est préalablement revêtu d'un apprêt.

5. Procédé de formation d'un film de revêtement multicouche selon l'une des revendications 1 à 4, dans lequel l'élément en plastique est constitué d'un matériau composite composé d'une résine polyamide et d'une résine polyphénylène-éther modifiée.

6. Procédé de formation d'un film de revêtement multicouche selon l'une des revendications 1 à 5, dans lequel la peinture transparente à base de solvant de type 2 paquets (Z) contient en outre des particules de silice modifiées par des polysiloxanes (Z3), dont le diamètre moyen des particules primaires est compris entre 1 et 40 nm.

7. Film de revêtement multicouche obtenu par le procédé de formation d'un film de revêtement multicouche selon l'une des revendications 1 à 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61198674682 A
- JP 2011131135 A
- JP 2006326538 A
- US 2018104718 A1
- JP 2014070151 A